# EUROPÄISCHE PATENTSCHRIFT

(11) **EP 2 855 143 B1**
(45) Veröffentlichungstag und Bekanntmachung des Hinweises auf die Patenterteilung: **02.03.2016**
(21) Anmeldenummer: 13727564.0
(22) Anmeldetag: 29.05.2013
(51) Int. Cl.: B32B 5/26, B60R 13/02, D04H 11/00

(54) **EINLEGEMATTE FÜR KRAFTFAHRZEUGE ZUM AUFLEGEN AUF EINE BODENTEPPICHSTRUKTUR DES KRAFTFAHRZEUGES**
INSERT MAT FOR MOTOR VEHICLES FOR LAYING ON A FLOOR CARPET STRUCTURE OF THE MOTOR VEHICLE
TAPIS D'APPOINT MARQUETÉ POUR VÉHICULES AUTOMOBILES À APPLIQUER SUR UNE STRUCTURE DE TAPIS DE PLANCHER DU VÉHICULE AUTOMOBILE

(30) Priorität: 30.05.2012 DE 102012104656
(43) Veröffentlichungstag der Anmeldung: 08.04.2015
(73) Patentinhaber: Ideal Automotive Oelsnitz GmbH, 08606 Oelsnitz (DE)
(72) Erfinder: RÖDING, Hubert, 96157 Ebrach (DE); THOMA, Wulf, 96170 Lisberg (DE)
(74) Vertreter: Gassner, Wolfgang
(86) Internationale Anmeldenummer: PCT/EP2013/061125
(87) Internationale Veröffentlichungsnummer: WO 2013/178710

(56) Entgegenhaltungen:
- DE-A1-102005 025 681
- DE-A1-102005 037 572

## Beschreibung

Die Erfindung betrifft eine Einlegematte nach dem Oberbegriff des Anspruchs 1.

Aus der DE 41 31 394 A1 ist ein Schalldämmmaterial bekannt, welches als Verbund aus wenigstens zwei Schichten aufgebaut ist, wobei wenigstens eine der Schichten aus einem luftdurchlässigen Faservlies besteht, wobei diese Schicht mit wenigstens einer weiteren Komponente des Verbundes so verklebt ist, dass die Luftdurchlässigkeit des Faservlieses im Wesentlichen erhalten bleibt. Des Weiteren ist eine weitere Schicht in Form einer Kernschicht mit im Wesentlichen vertikal, gegebenenfalls leicht geneigt zu der Schicht aus luftdurchlässigen Faservlies verlaufenden Wänden vorgesehen, welche in ihrer Gesamtheit eine Vielzahl an einer Endseite offene Hohlräume bilden. Ein derartiges Schalldämmmaterial ist für den Einsatzzweck der Erfindung nicht geeignet. Insbesondere macht die aus offenen Hohlräumen gebildete Kernschicht den Einsatz als Einlegematte für Kraftfahrzeuge unmöglich, da dieses Schalldämmmaterial nicht ausreichend trittfest ist.

Aus der US 2005/0075025 A1 ist ein Teppichaufbau für den Gebrauch in Fahrzeugen bekannt, welcher eine Dekorschicht und eine nichtgewebte Faserschicht als Schallabsorptionsschicht sowie eine Klebstoffschicht aufweist, welche die Dekorschicht und die Schallabsorptionsschicht miteinander verbindet. Die Klebeschicht ist als luftdurchlässige Klebeschicht ausgebildet, wobei die Klebstoffschicht durch faserartige, in einem Extruder erschmolzene Klebstofffäden gebildet ist. Ein derartiger Teppichaufbau ist als Einlegematte zum Auflegen auf eine Bodenteppichstruktur ungeeignet, da sie nicht über eine ausreichende Haftung beim Auflegen auf einen bereits vorhandenen Kraftfahrzeugteppich verfügt. Derartige Teppichaufbauten würden, als Einlegematten eingesetzt, zu unerwünschtem Verrutschen auf der z.B. fest im Fahrzeug eingebauten Teppichstruktur neigen.

Aus der WO 03/045682 A1 ist ein poröser Teppich für Fahrzeuge sowie dessen Herstellungsverfahren bekannt, bei dem eine tuftartige Dekorschicht verwendet wird. Die tuftartige Dekorschicht besitzt Filamentbögen, die eine Trägerschicht des Tufts bogenartig durchdringen, so dass auf der Rückseite der Trägerschicht des Tufts Filamentbögen vorliegen. Die Filamentbögen werden zunächst in einer geschlossenen Kleberschicht gefasst und bezüglich der Trägerschicht des Tufts fixiert. Anschließend werden durch Anlegen von Vakuum bei erweichtem Klebstoff feine Kanäle in die Klebstoffschicht eingebracht, so dass eine gewisse Luftdurchlässigkeit der Klebstoffschicht und somit des Tufts erreicht wird. Es hat sich gezeigt, dass für den Einsatzbereich als Einlegematte eine derartige Luftdurchlässigkeit zu gering ist. Zudem erscheint das Herstellungsverfahren aufwändig und hinsichtlich der Anzahl von Luftkanälen pro Fläche und der gleichmäßigen Verteilung der durch Anlagen von Vakuum entstehenden Luftkanäle nicht immer ausreichend vorbestimmbar.

Des Weiteren ist eine relativ hohe Menge an Klebstoff erforderlich, um einerseits die Filamentbögen bezüglich der Trägerschicht des Tufts zu fixieren und andererseits die Filamente der Filamentbögen zueinander ausreichend zu fixieren.

Ausgehend von oben genanntem Stand der Technik besteht die Aufgabe der Erfindung darin, eine Einlegematte für Kraftfahrzeuge zum Auflegen auf eine schallabsorbierende Bodenteppichstruktur des Kraftfahrzeuges anzugeben, welche es ermöglicht, das Schallabsorptionsvermögen des unter der Einlegematte schallabsorbierenden vorhandenen Fahrzeugteppichs nicht zu beeinträchtigen.

Insbesondere ist es eine Aufgabe der Erfindung, die Einlegematte dauerhaft verformbar, insbesondere als dreidimensionales Formteil dauerhaft verformbar, ausbilden zu können.

Eine weitere Aufgabe der Erfindung ist es, zusätzlich zur Schallabsorptionsfähigkeit der Einlegematte diese möglichst feuchtigkeits-/nässeundurchlässig auszubilden.

Eine weitere Aufgabe der Erfindung ist es, eine Einlegematte anzugeben, die auf einer vorhandenen Bodenteppichstruktur des Kraftfahrzeuges bevorzugt ohne weitere Befestigungsmittel besonders rutschfest angeordnet werden kann.

Diese Aufgaben werden mit einer Einlegematte mit den Merkmalen des Anspruchs 1 gelöst. Vorteilhafte Ausführungsformen sind in den Unteransprüchen angegeben.

Die Aufgabe wird insbesondere durch eine Einlegematte für Kraftfahrzeuge zum Auflegen auf eine Bodenteppichstruktur des Kraftfahrzeugs mit einem mindestens dreischichtigen Aufbau gelöst, wobei der Aufbau aufweist:
- eine im bestimmungsgemäßen Gebrauch der Einlegematte einem Fahrzeuginnenraum zugewandte Dekorschicht,
- welche mit einer im bestimmungsgemäßem Gebrauch dem Fahrzeuginnenraum zugewandten Oberseite einer Trägerschicht verbunden ist und
- eine Haftschicht, welche im bestimmungsgemäßen Gebrauch der Einlegematte mit einer Unterseite der Trägerschicht verbunden ist und zum verkrallenden Zusammenwirken mit einem Bodenteppich eines Fahrzeuges eingerichtet ist,
- wobei der gesamte Aufbau luftdurchlässig ausgebildet ist, wobei
- die Dekorschicht ein Tuft ist, die Trägerschicht ein Vlies ist, und die Haftschicht ein Tuft ist.

Übliche, bisher verwendete Aufbauböden für Fußmatten bestanden aus fünf Schichten, wobei derartige Fußmatten, wenn sie umformbar und damit in Form gebracht in eine Bodenkontur eines Fahrzeugs passgenau einlegbar sein sollen, zwischen einer Dekorschicht und einer Vliesmittellage einerseits und einer Haftschicht und derselben Mittellage zwei dicke Kleberschichten besitzt. Diese dicken Kleberschichten besitzen Flächengewichte von deutlich über 300 g/m² und bestehen aus einem thermoplastischen Klebstoff, welcher nicht nur eine Bindungs- sondern auch eine Stabilitätsfunktion übernimmt und für die Umformbarkeit sorgt. Bislang verwendete Vliese waren sogenannte Non-Vowen-Vliese mit 80 g/m² bis 200 g/m² und 1 mm bis 2 mm Stärke.

Derartige, bisherige bekannte Fußmattenaufbauten ließen sich in einer Endlosfertigung herstellen, besitzen aber keine oder eine nur sehr geringe Luftdurchlässigkeit. Bei derartigen Materialien nach dem Stand der Technik wird beim Auflegen dieses Materials als Fußmatte auf eine als Schallabsorber arbeitende Bodenteppichstruktur eines Kraftfahrzeuges, deren schallabsorbierende Funktion deutlich verschlechtert.

Die Erfindung sieht nun vor, ein hochluftdurchlässiges Material zu schaffen, welches gleichwohl verformbar ist und die Form auch beibehält. Dabei ist dieses Material derart luftdurchlässig, dass bei Prüfungen durch dieses Material hindurch eine Kerze ausgeblasen werden konnte, während das getestete Material gleichzeitig jedoch wasserundurchlässig war.

Diese an sich widersprüchlichen Eigenschaften werden dadurch erreicht, dass als Vliesmittellage ein Vlies verwendet wird, was bislang für derartige Anwendungen unbekannt war und eigentlich in der Textilindustrie für Bekleidung verwendet wird. Dieses Vlies hat eine Dicke von bis zu 2 mm bei einem Flächengewicht von 200 g/m² bis 450 g/m², insbesondere 220 g/m² bis 260 g/ m². Dieses Vlies enthält 15 % bis 25 % Klebefasern, insbesondere 20 % Klebefasern. Die Luftdurchlässigkeit beträgt zwischen 2000 l/ m²/s und 3500 l/ m²/s bei einer Druckdifferenz von 200 Pa. Die Vliesmittellage besteht z.B. aus einem PET- und/oder einem Naturfaservlies.

Da diese Vliesmittellage allein bereits ein gutes Umformverhalten besitzt, können sowohl die außenliegende Dekorschicht als auch die unten liegende Haftschicht mit einer relativ dünnen Kleberschicht an die Vliesmittellage angebunden werden, wobei Klebstoffgewichte von 150 g/m² schon ausreichend sind. Mit einem solchen Flächengewicht an Klebstoff kann diese Kleberschicht eine Umformfunktion nicht erfüllen. Zudem werden diese Kleberschichten nicht vollflächig aufgebracht. Insgesamt ergibt sich hieraus ein Gesamtgewicht des erfindungsgemäßen Aufbaus von etwa 480 g/m² bis 550 g/m² gegenüber über 700 g/m² bei bekannten Aufbauten.

Der Kleber zwischen der Vliesmittellage und der Dekorschicht einerseits und der Haftschicht andererseits kann ein wärmeaktivierbarer Klebstoff sein, es kann sich jedoch auch um einen Reaktionskleber handeln. Wird ein Reaktionsklebstoff verwendet, verändert sich die Verarbeitbarkeit des Gesamtverbundes. Sollten thermoaktivierbare Kleber verwendet werden, werden entsprechende Vorformlinge sowohl aus der Vliesmittellage als auch aus der Dekorschicht und der Haftpflicht ausgeschnitten, wobei der Klebstoffauftrag auf die jeweilige Rückseite mit den hohlen Noppen sowohl der Haftschicht als auch der Dekorschicht, welche beide als Tuft ausgebildet sind, aufgebracht wird. Diese dann bereits mit Klebstoff versehenen Schichten werden anschließend zusammen mit der Vliesmittellage lagerichtig und fluchtend in ein Formwerkzeug eingelegt, gemeinsam erwärmt und umgeformt. Hierdurch wird einerseits der Verbund hergestellt und andererseits die entsprechende stabile Form erzielt.

Wird ein Reaktionsklebstoff für die Verbindung der Schichten miteinander verwendet, kann das Material als Rollenware zur Verfügung gestellt werden, da eine Verbindung des Verbundes untereinander schon besteht, die wärmeunabhängig ist. Sodann können aus dieser Rollenware bereits die Vorformlinge ausgestanzt und in ein Umformwerkzeug eingelegt werden.

Der Klebstoff ist hinsichtlich der Menge je Filamentbogen und hinsichtlich seiner Viskosität während der Herstellung der Einlegematte derart gewählt, dass die Filamentbögen bezüglich einer Trägerschicht des Dekorteppichs und einer Trägerschicht der Haftschicht fixiert sind, und eine nicht vollflächige, partielle, punktuelle/ linienförmige Verklebung der Filamentbögen mit der Trägerschicht der Einlegematte erfolgt, und eine überwiegende Anzahl von Filamenten eines Filamentbogens mittels des Klebstoffs zueinander fixiert sind.

In vorteilhafter Weise können die Filamentbögen bezüglich der Trägerschicht ausschließlich über dem Klebstoff fixiert sein und keine anderweitige Fixierung, z.B. in Form einer Latexschicht vorgesehen sein.

Zudem können bei einer weiteren vorteilhaften Ausführungsform zwischen den noppenartigen Filamentbögen Noppengassen frei bleiben, die frei von Klebstoff sind.

Vorteilhaft ist zudem, wenn der Klebstoff bei der Herstellung der Einlegematte mittels einer Kleberwalze auf die Filamentbögen, insbesondere auf die Zenite der Filamentbögen aufgetragen wird.

Vorteilhafter Weise ist der Klebstoff ein thermoplastischer Kleber.

Zudem ist von Vorteil, wenn die Trägerschicht (Vliesmittellage) der Einlegematte ein luftdurchlässiges Trägervlies mit hydrophober Ausrüstung ist.

Zudem ist von Vorteil, wenn die Dekorschicht ein Econyl-Hochflortuft mit einen Flächengewicht von 860 g/m² ist.

Vorteilhaft ist zudem, wenn die Verhakungsschicht ein Antirutschtuft mit 400 g/m² ist.

Vorteilhafter Weise hält die hydrophobe Ausrüstung der Trägerschicht einem Druck von 50 mm bis 60 mm Wassersäule stand.

Vorteilhaft ist zudem, wenn die Trägerschicht ein thermisch verfestigter Vlies mit einem maximalen Anteil an thermisch aktiven Fasern von 20 % ist.

Vorteilhaft ist zudem, wenn ein Anteil von 100 % bis 20 % der Fasern des die Trägerschicht bildenden Trägervlieses thermisch aktivierbare Fasern sind.

Vorteilhafter Weise ist die Einlegematte aus zwei Zwischenprodukten hergestellt, wobei das erste Zwischenprodukt aus der Dekorschicht, der Trägerschicht und dem Klebstoff zwischen der Dekorschicht und der Trägerschicht gebildet ist, das zweite Zwischenprodukt aus der Haftschicht gebildet ist, welche an den Zeniten der Filamentbögen den Klebstoff aufweist und das erste Zwischenprodukt mit dem zweiten Zwischenprodukt in einer beheizbaren Presse, insbesondere in einem Formwerkzeug, miteinander verbunden wird.

Vorteilhafter Weise ist auf einer freien Außenseite der Haftschicht zusätzlich bereichsweise Haft- oder Verhakungsmittel zum Zusammenwirken mit beispielsweise einem Haft- oder Verhakungspartner der Fahrzeugteppichbodenstruktur vorhanden.

Im Folgenden wird die Erfindung anhand der Figuren beispielhaft näher erläutert. Es zeigen:
- Figur 1:: schematisch einen Schichtaufbau einer erfindungsgemäßen Einlegematte im Querschnitt;
- Figur 2:: schematisch eine detailliertere Darstellung des Schichtaufbaus der Ausführungsform gemäß Figur 1 mit Klebelinie;
- Figur 3:: eine Ansicht auf mit Klebestoff versehene Filamentbögen von als Dekor- und/oder als Haftschicht verwendeten Tuftmaterialien;
- Figur 4:: schematisch ein Diagramm, in dem die äquivalente Absorptionsfläche über der Frequenz aufgetragen ist, aufweisend Messkurven einer Bodenverkleidung (Bodenteppichstruktur) des Kraftfahrzeugs alleine, der erfindungsgemäßen Einlegematte alleine und einen Verbund aus Bodenverkleidung/Bodenteppichstruktur und der Einlegematte gemäß der Erfindung sowie eine Zielkurve der Absorption.

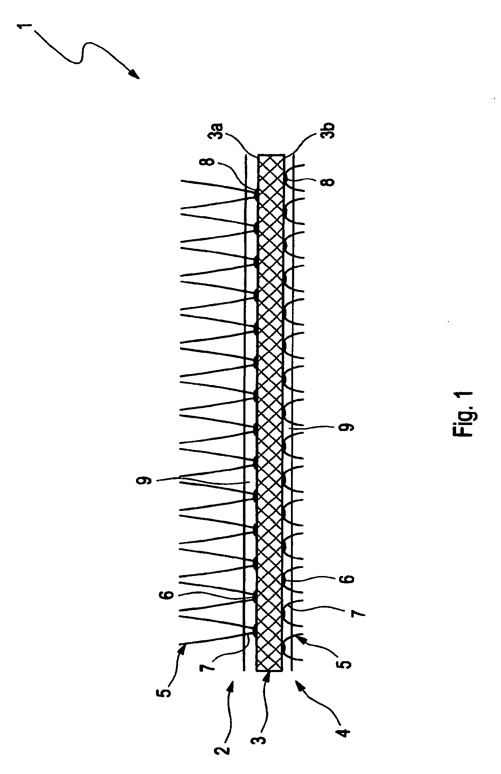

Der Schichtaufbau einer erfindungsgemäßen Einlegematte im Querschnitt ergibt sich insbesondere aus Figur 1. Die erfindungsgemäße Einlegematte ist grundsätzlich zur zusätzlichen Verwendung zu einem im Fahrzeug befindlichen Teppich bzw. in eine entsprechende textilen Auskleidung vorgesehen.

Insbesondere handelt es sich dabei um die übliche schallabsorbierende Bodenteppichstruktur, die in Kraftfahrzeugen vorhanden ist.

Grundsätzlich besitzt die erfindungsgemäße Einlegematte 1 einen im Wesentlichen dreischichtigen Aufbau, wobei eine Dekorschicht 2 vorhanden ist. Eine derartige Dekorschicht 2 ist einem Fahrzeuginnenraum zugewandt. Zudem sind eine Trägerschicht 3 und eine bei bestimmungsgemäßem Gebrauch einem Fahrzeugboden bzw. einer Bodenteppichstruktur eines Fahrzeugs zuweisenden Haftschicht 4 vorhanden.

Die Trägerschicht 3 besitzt eine Oberseite 3a und eine Unterseite 3b, so dass die Oberseite 3a der Dekorschicht 2 zugewandt ist, und die Unterseite 3b der Haftschicht 4 zugewandt ist.

Die Dekorschicht 2 ist als sogenanntes Tuft ausgebildet. Ein Tuft ist ein textiles Material, bei dem Nadeln das sogenannte Polgarn in ein Grundmaterial, beispielsweise ein Gewebe oder Vlies (den sogenannten Erstrücken), einbringen. Hierdurch werden sogenannte Polnoppen 5, also Schlaufen, auf der Oberseite des Tufting-Gewebes oder -Vlieses ausgebildet. Die Schlingen können mit einem Messer aufgeschnitten werden, so dass ein Veloursteppich bzw. Schnittflorteppich entsteht. Die Dekorschicht ist beispielsweise ein Econyl-Hochflortuft.

Die Trägerschicht 3 ist als Vlies ausgebildet, wobei auch die Haftschicht 4 als Tuft ausgebildet ist. Sowohl die Dekorschicht 2 als auch die Haftschicht 3 besitzen Polschlaufen 5, wobei die Polschlaufen 5 noppenartige Filamentbögen 7 an der der Trägerschicht 3 zugewandten Seite besitzen, wobei die noppenartigen Filamentbögen 7 Zenite 6 bilden, und die Zenite 6 der Filamentbögen 7 der Trägerschicht 3 zugewandt angeordnet sind.

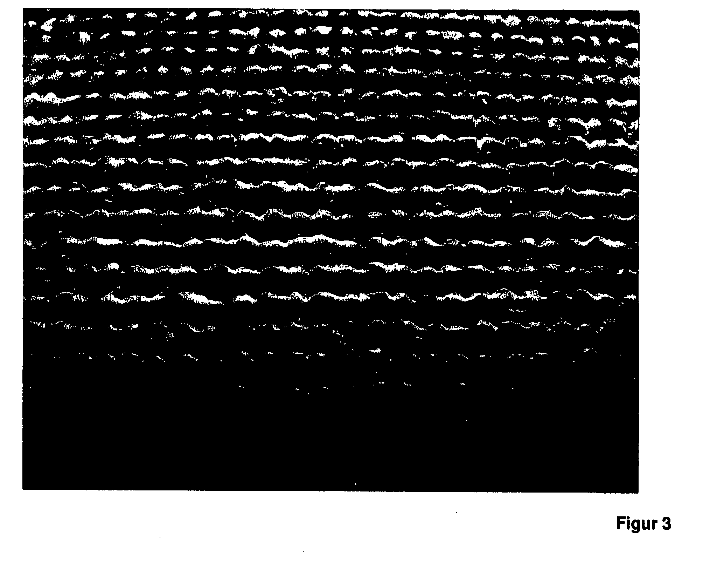

Zur Befestigung der Dekorschicht 2 und/oder der Haftschicht 4 ist auf die Zenite 6 punktuell oder linienförmig ein Klebstoff 8 aufgebracht. Eine linienartige Anordnung kann sich auch dadurch ergeben, dass punktuell aufgebrachter Klebstoff 8 benachbarter Zenite 6 zusammenläuft. Wie in Figur 3 ersichtlich, ergeben sich hier entlang der Zenite 6 laufende Kleberbahnen bzw. -linien und während dazwischen Noppengassen 9 frei bleiben, die frei von Klebstoff sind.

Der Klebstoff 8 wird insbesondere mittels einer Kleberwalze auf die Filamentbögen 7 bzw. die Zenite 6 der Filamentbögen 7 aufgebracht. Hierbei kann der Klebstoff 8 beispielsweise ein thermoplastischer Klebstoff aber auch jeder andere Klebstoff sein.

Die Trägerschicht 3 ist ein Gewebe, Gewirk, ein Filz oder ein Vlies, wobei die Trägerschicht 3 luftdurchlässig ausgebildet ist. Zudem kann die Trägerschicht 3 eine hydrophobierte Ausrüstung besitzen, wobei die Anforderung an die hydrophobierte Ausrüstung jedoch ist, dass hierdurch die Luftdurchlässigkeit nicht wesentlich beeinflusst wird.

Die Dekorschicht ist insbesondere ein Hochflortuft mit einem Flächengewicht von 350 g/m² bis 860 g/m².

Das Trägervlies der Trägerschicht 3 ist beispielsweise ein PET-Vlies und/oder ein Naturfaservlies mit einem Flächengewicht von 220 g/m² bis 450 g/m².

Die Haftschicht 4 ist beispielsweise ein Antirutschtuft mit 300 g/m² bis 500 g/m².

Der Klebstoff 8 wird auf die Zenite 6 in einer Menge von 80 g/m² bis 300 g/m² je Klebschicht aufgebracht.

Die hydrophobierte Ausrüstung der Trägerschicht 3 wird vorzugsweise derart ausgelegt, dass sie einem Druck von 50 mm bis 60 mm Wassersäule standhält, so dass zwar die Dekorschicht 2 durchnässt werden kann, jedoch kein Wasser durch die Trägerschicht 3 hindurch auf einen Bodenteppich des Fahrzeuges gelangt. Von der Dekorschicht 2 kann aufgebrachte Flüssigkeit dann abtrocknen.

Das Vlies der Trägerschicht 3 ist vorzugsweise ein PET-Vlies, wobei die Trägerschicht 3 15 % bis 25 %, insbesondere 20 % der Fasern des die Trägerschicht 3 bildenden Trägervlieses thermisch aktivierbare Klebfasern sind.

Die erfindungsgemäße Einlegematte 1 kann hierbei aus zwei Zwischenprodukten hergestellt werden, wobei das erste Zwischenprodukt aus der Dekorschicht 2, der Trägerschicht 3 und dem Klebstoff 8 zwischen der Dekorschicht 2 und der Trägerschicht 3 gebildet wird.

Das zweite Zwischenprodukt besteht aus der Haftschicht 4, welche an den Zeniten 6 der Filamentbögen 7 den Klebstoff 8 aufweist.

Die beiden Zwischenprodukte werden gemeinsam in eine beheizbare Presse eingebracht und dort durch Pressen und Erhitzen miteinander verbunden, wobei insbesondere von Vorteil ist, wenn sowohl der Kleber als auch das Vlies thermisch aktivierbar sind. Hierbei kann die Verpressung vorzugsweise derart erfolgen, dass bereits die Zwischenprodukte auf das erforderliche Maß zugeschnitten sind, und in die Presse in entsprechender Überdeckung eingelegt, und anschließend verbunden werden.

Vorzugsweise können an der freien Außenseite der Haftschicht 4 zusätzlich Haft- oder Verhakungsmittel zum Zusammenwirken mit beispielsweise einem Haft- oder Verhakungspartner in der Fahrzeugteppichbodenstruktur vorhanden sein.

Hierzu ist es zudem möglich, der Einlegematte eine vorgegebene, an die Fahrzeugkarosserie angepasste Form zu geben.

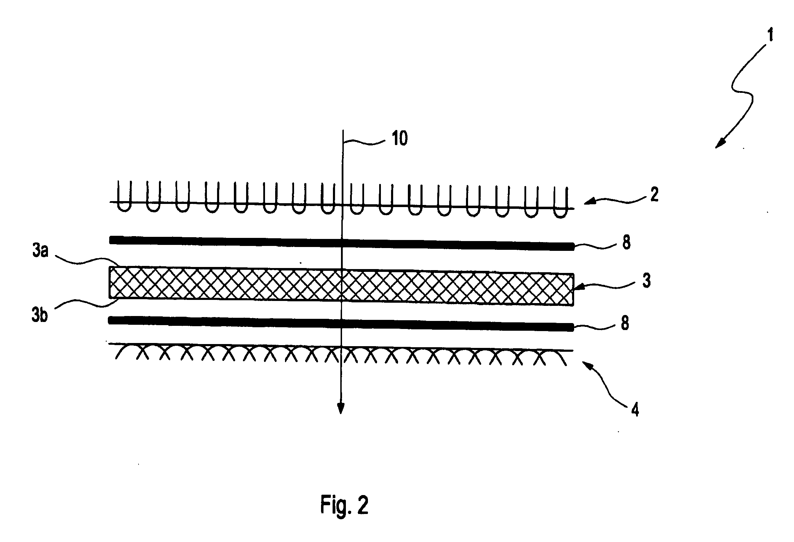

Figur 2 zeigt noch einmal den erfindungsgemäßen luftdurchlässigen Aufbau einer Einlegematte 1 für eine optimale, akustische Absorption, zeigend die Dekorschicht 2, welche beispielsweise als Hochflortuft ausgebildet ist, eine erste Klebeschicht 8, welche linienförmig dargestellt ist und die Zenite 6 der Filamentbögen 7 verbindet, so dann die Trägerschicht 3 mit einer Trägerschichtoberseite 3a und einer Trägerschichtunterseite 3b, eine zweite Klebeschicht 8 zwischen der Trägerschicht 3 und der Haftschicht 4, welche insbesondere ein Antirutschtuft ist.

Der Pfeil 10 zeigt die Durchströmungsrichtung.

Wie bereits ausgeführt, erkennt man in Figur 3 den nicht vollflächig sondern auf die Zenite 6 der Filamentbögen 7 aufgebrachten Klebstoff 8, der teilweise verlaufen ist, und die entsprechenden Klebstofflinien bildet, teilweise jedoch vereinzelt auf den Noppen aufliegt. Sehr gut erkennt man die dazwischenliegenden Noppengassen 9, welche die Durchströmbarkeit nicht behindern.

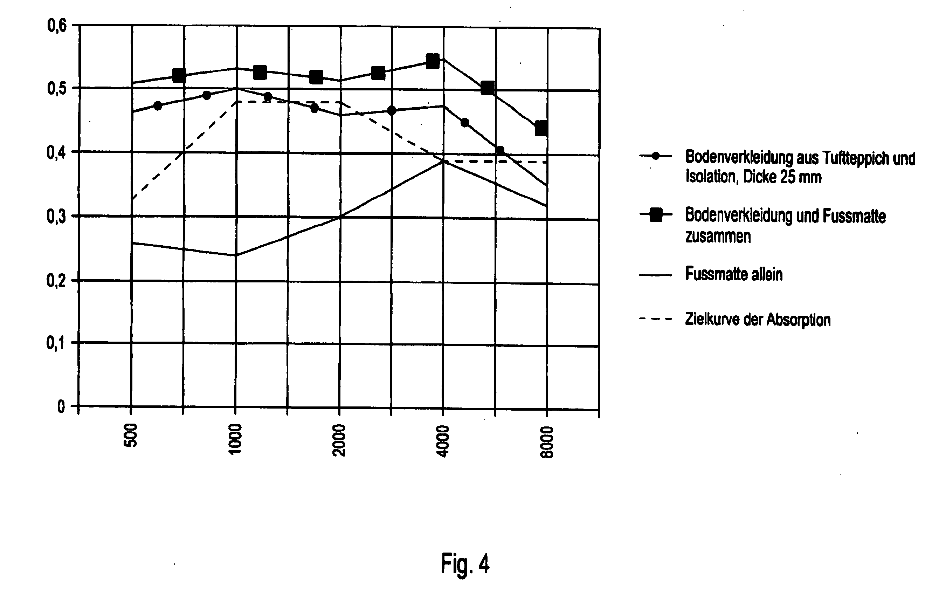

Figur 4 zeigt verschiedene Absorptionskurven der Schallabsorption einer Fußmatte, gemessen in einer Alphakabine nach den Prüfvorschriften der Automobilhersteller.

Hierbei ist einmal die Zielkurve der Absorption dargestellt und im Gegensatz hierzu die Absorptionskurve einer erfindungsgemäßen Fußmatte allein. Zudem ist die Bodenverkleidung aus dem Tuftteppich und einer Isolation aus einer Dicke von 25 mm, wie sie dem Teppichbodenaufbau in Kraftfahrzeugen entspricht, aufgezeichnet.

Darüberliegend erkennt man die verbesserte Schallabsorption einer Bodenverkleidung und der erfindungsgemäßen Fußmatte im Zusammenspiel.

Bei der erfindungsgemäßen luftdurchlässigen Fußmatte ist von Vorteil, dass auf eine kostengünstige Weise eine auf eine vorhandene Bodenteppichstruktur des Kraftfahrzeuges ohne weitere Befestigungsmittel rutschfest anordenbare Einlegematte geschaffen wird, welche zusammen mit der Bodenteppichstruktur einen höheren Absorptionsgrad ausbildet.

### Bezugszeichenliste

- 1: Einlegematte
- 2: Dekorschicht
- 3: Trägerschicht
- 3a: Trägerschichtoberseite
- 3b: Trägerschichtunterseite
- 4: Haftschicht
- 5: Polschlaufen
- 6: Zenite
- 7: Filamentbögen
- 8: Klebstoff
- 9: Noppengassen
- 10: Pfeil

## Patentansprüche

1. Einlegematte (1) für Kraftfahrzeuge zum Auflegen auf eine schallabsorbierende Bodenteppichstruktur des Kraftfahrzeugs mit einem mindestens dreischichtigen Aufbau, wobei der Aufbau aufweist:
- eine im bestimmungsgemäßen Gebrauch der Einlegematte (1) einem Fahrzeuginnenraum zugewandte Dekorschicht (2),
- welche mit einer im bestimmungsgemäßem Gebrauch dem Fahrzeuginnenraum zugewandten Oberseite (3a) einer Trägerschicht (3) verbunden ist und
- eine Haftschicht (4), welche im bestimmungsgemäßen Gebrauch der Einlegematte (1) mit einer Unterseite (3b) der Trägerschicht (3) verbunden ist und zum verkrallenden Zusammenwirken mit einem Bodenteppich eines Fahrzeuges eingerichtet ist,
- wobei der gesamte Aufbau luftdurchlässig ausgebildet ist,
**dadurch gekennzeichnet, dass**
- die Dekorschicht (2) ein Tuft ist, die Trägerschicht (3) ein Vlies ist, und die Haftschicht (4) ein Tuft ist,
- und der Tuft der Dekorschicht (2) und der Haftschicht (4) jeweils einen Erstrücken durchgreifende Polschlaufen (5) aufweisen, wobei die Polschlaufen (5) der Trägerschicht (3) zugewandte Zenite (6) besitzen und
- wobei mittels punktuell oder linienförmig auf die Zenite (6) aufgetragenem Klebstoff (8) die luftdurchlässige Verbindung der Dekorschicht (2) an einer Oberseite (3a) und der Haftschicht (4) an einer Unterseite (3b) der Trägerschicht (3) bewirkt ist.

2. Einlegematte nach Anspruch 1, **dadurch gekennzeichnet, dass** der Klebstoff (8) ein thermoplastischer Kleber ist.

3. Einlegematte nach einem der vorangegangenen Ansprüche, **dadurch gekennzeichnet, dass** die Trägerschicht (3) der Einlegematte (1) ein luftdurchlässiges Trägervlies mit hydrophober Ausrüstung ist.

4. Einlegematte nach einem der vorangegangenen Ansprüche, **dadurch gekennzeichnet, dass** die Dekorschicht (2) ein Tuft, insbesondere ein Econyl-Hochflortuft mit einem Flächengewicht von 305 g/m2 bis 860 g/m2 ist.

5. Einlegematte nach einem der vorangegangenen Ansprüche, **dadurch gekennzeichnet, dass** das Trägervlies der Trägerschicht (3) ein PET-Vlies oder ein Naturvlies mit einem Flächengewicht von 200 g/m2 bis 450 g/m2 ist.

6. Einlegematte nach einem der vorangegangenen Ansprüche, **dadurch gekennzeichnet, dass** die Haftschicht (2) ein Antirutschtuft mit 300 g/m2 bis 500 g/m2 ist.

7. Einlegematte nach einem der vorangegangenen Ansprüche, **dadurch gekennzeichnet, dass** der Klebstoff (8) in einer Menge von 80 g/m2 bis 300 g/m2 je Klebeschicht aufgebracht ist.

8. Einlegematte nach einem der vorangegangenen Ansprüche, **dadurch gekennzeichnet, dass** die hydrophobe Ausrüstung der Trägerschicht (3) einem Druck von mindestens 50 mm Wassersäule standhält.

9. Einlegematte nach einem der vorangegangenen Ansprüche, **dadurch gekennzeichnet, dass** ein Anteil von 20 % der Fasern des die Trägerschicht (3) bildenden Trägervlieses thermisch aktivierbare Klebfasern sind.

10. Einlegematte nach einem der vorangegangenen Ansprüche, **dadurch gekennzeichnet, dass** die Einlegematte aus zwei Zwischenprodukten hergestellt ist, wobei das erste Zwischenprodukt aus der Dekorschicht (2), der Trägerschicht (3) und dem Klebstoff (8) zwischen der Dekorschicht (2) und der Trägerschicht (3) gebildet ist, das zweite Zwischenprodukt aus der Haftschicht (4) gebildet ist, welche an den Zeniten (6) der Filamentbögen (7) den Klebstoff (8) aufweist, wobei das erste Zwischenprodukt mit dem zweiten Zwischenprodukt nach einer thermischen Aktivierung in einer Vorrichtung, vorzugsweise mittels eines Formwerkzeuges, miteinander verbunden wird.

11. Einlegematte nach einem der vorangegangenen Ansprüche, **dadurch gekennzeichnet, dass** auf einer freien Außenseite der Haftschicht (4) zusätzlich bereichsweise Haft- oder Verhakungsmittel zum Zusammenwirken mit beispielsweise einem Haft- oder Verhakungspartner der Fahrzeugteppichbodenstruktur vorhanden ist.

## Claims

1. An insert mat (1) for motor vehicles for placing onto a sound-absorbing wall-to-wall carpet structure of the motor vehicle, having an at least three-layer structure, in which the structure has:
- a decorative layer (2), which is oriented toward the interior of the vehicle in the proper position of the insert mat (1),
- and is attached to a top surface (3a) of a support layer (3), which surface is oriented toward the interior of the vehicle in the proper position, and
- a gripping layer (4), which in the proper position of the insert mat (1), is attached to a bottom surface (3b) of the support layer (3) and is embodied to achieve a hooking interaction with a wall-to-wall carpet of a vehicle,
- in which the entire structure is embodied to be air permeable,
**characterized in that**
- the decorative layer (2) is a tuft, the support layer (3) is a nonwoven, and the gripping layer (4) is a tuft,
- the tuft of the decorative layer (2) and the gripping layer (4) have pile loops (5) which pile loops (5) are inserted into a primary backing, whereas the pile loops (5) have zeniths (6) which zeniths (6) facing the support layer (3) and
- whereas by means of an adhesive (8) applicated on the zeniths (6) in a point-like or line-like manner the air-permeable connection of the decorative layer (2) is produced at an top surface (3a) of the support layer (3) and the air-permeable connection of the gripping layer (4) is produced at a bottom surface (3b) of the support layer (3).

2. The insert mat according to claim 1, **characterized in that** the adhesive (8) is a thermoplastic adhesive.

3. The insert mat according to one of the preceding claims, **characterized in that** the support layer (3) of the insert mat (1) is an air permeable support nonwoven with a hydrophobic finish.

4. The insert mat according to one of the preceding claims, **characterized in that** the decorative layer (2) is a tuft, in particular an Econyl high-pile tuft with a mass per unit area of 305 g/m² to 860 g/m².

5. The insert mat according to one of the preceding claims, **characterized in that** the support nonwoven of the support layer (3) is a PET nonwoven or a natural nonwoven with a mass per unit area of 200 g/m² to 450 g/m².

6. The insert mat according to one of the preceding claims, **characterized in that** the gripping layer (2) is a non-slip tuft with a mass per unit area of 300 g/m² to 500 g/m².

7. The insert mat according to one of the preceding claims, **characterized in that** the adhesive (8) is applied in a quantity of 80 g/m² to 300 g/m² per adhesive layer.

8. The insert mat according to one of the preceding claims, **characterized in that** the hydrophobic finish of the support layer (3) withstands a pressure of at least 50 mm of a water column.

9. The insert mat according to one of the preceding claims, **characterized in that** a portion of 20% of the fibers of the support nonwoven that constitutes the support layer (3) are thermally activated adhesive fibers.

10. The insert mat according to one of the preceding claims, **characterized in that** the insert mat is manufactured out of two intermediate products; the first intermediate product is composed of the decorative layer (2), the support layer (3), and the adhesive (8) between the decorative layer (2) and the support layer (3), the second intermediate product is composed of the gripping layer (4), which has the adhesive (8) at the zeniths (6) of the filament arcs (7), the first intermediate product is attached to the second intermediate product after a thermal activation in a device, preferably by means of a forming tool.

11. The insert mat according to one of the preceding claims, **characterized in that** on a free outer surface of the gripping layer (4), gripping or hooking means for cooperating, for example, with a gripping or hooking partner of the wall-to-wall vehicle carpet structure are also provided in some regions.

## Revendications

1. Tapis d'appoint (1) pour véhicules automobiles à appliquer sur une structure de tapis de plancher à absorption acoustique du véhicule automobile ayant au moins une structure à trois couches, ladite structure présentant:
- une couche décorative (2) orientée vers l'habitacle lors de l'usage conforme du tapis d'appoint (1),
- qui est reliée, lors de l'usage conforme, au côté supérieur (3a) d'une couche support (3) orienté vers l'habitacle et
- une couche adhésive (4) qui est reliée, lors de l'usage conforme du tapis d'appoint (1) à un côté inférieur (3b) de la couche support (3) et est conçue pour coopérer par accrochage avec un tapis de plancher d'un véhicule,
- la structure totale étant conçue pour laisser passer l'air,
**caractérisé en ce que**
- la couche décorative (2) est un tissu tufté, la couche support (3) est un non-tissé et la couche adhésive (4) est un tissu tufté,
- et le tissu tufté de la couche décorative (2) et la couche adhésive (4) présentent chacun un envers primaire par des boucles de poils (5) s'accrochant, les boucles de poils (5) possédant des zéniths (6) orientés vers la couche support (3) et
- **en ce qu'**au moyen de colle (8) appliquée ponctuellement ou linéairement sur les zéniths (6) la liaison perméable à l'air de la couche décorative (2) est effectuée sur un côté supérieur (3a) et la couche adhésive (4) sur un côté inférieur (3b) de la couche support (3).

2. Tapis d'appoint selon la revendication 1, **caractérisé en ce que** la colle (8) est une colle thermoplastique.

3. Tapis d'appoint selon l'une des revendications précédentes, **caractérisé en ce que** la couche support (3) du tapis d'appoint (1) est un non-tissé de support perméable à l'air avec finissage hydrophobe.

4. Tapis d'appoint selon l'une des revendications précédentes, **caractérisé en ce que** la couche décorative (2) est un tissu tufté, en particulier un tissu tufté à poils longs Econyl d'un grammage compris entre 305 g/m² et 860 g/m².

5. Tapis d'appoint selon l'une des revendications précédentes, **caractérisé en ce que** le non-tissé de support de la couche support (3) est un non-tissé PET ou un non-tissé naturel d'un grammage compris entre 200 g/m² et 450 g/m².

6. Tapis d'appoint selon l'une des revendications précédentes, **caractérisé en ce que** la couche adhésive (2) est un tissu tufté antidérapant de 300 g/m² à 500 g/m².

7. Tapis d'appoint selon l'une des revendications précédentes, **caractérisé en ce que** la colle (8) est appliquée en une quantité comprise entre 80 g/m² et 300 g/m² par couche de colle.

8. Tapis d'appoint selon l'une des revendications précédentes, **caractérisé en ce que** le finissage hydrophobe de la couche support (3) résiste à une pression d'au moins 50 mm de colonne d'eau.

9. Tapis d'appoint selon l'une des revendications précédentes, **caractérisé en ce qu'**un pourcentage de 20% des fibres du non-tissé de support formant la couche support (3) sont des fibres adhésives thermiquement activables.

10. Tapis d'appoint selon l'une des revendications précédentes, **caractérisé en ce que** le tapis d'appoint est réalisé à partir de deux produits intermédiaires, le premier produit intermédiaire étant formé à partir de la couche décorative (2), de la couche support (3) et de la colle (8) entre la couche décorative (2) et la couche support (3), le deuxième produit intermédiaire étant formé à partir de la couche adhésive (4) laquelle présente la colle (8) au niveau des zéniths (6) des arcs de filament (7), le premier produit intermédiaire étant reliée au deuxième produit intermédiaire après une activation thermique dans un dispositif, de préférence au moyen d'un outil de formage.

11. Tapis d'appoint selon l'une des revendications précédentes, **caractérisé en ce qu'**il existe en outre, partiellement sur une face extérieure libre de la couche adhésive (4), des moyens d'adhérence ou d'accrochage destinés à coopérer avec par exemple un partenaire d'adhérence ou d'accrochage de la structure de tapis de plancher du véhicule automobile.
